# EUROPEAN PATENT SPECIFICATION

(11) **EP 3 853 332 B1**
(45) Date of publication and mention of the grant of the patent: **10.12.2025**
(21) Application number: 19748537.8
(22) Date of filing: 02.08.2019
(51) Int. Cl.: C11D 3/20, C11D 3/48, C11D 11/00, C11D 3/34, C08K 5/00, C08K 5/092

(54) **COMPOSITION**
ZUSAMMENSETZUNG
COMPOSITION

(30) Priority: 17.09.2018 EP 18194886
(43) Date of publication of application: 28.07.2021
(73) Proprietor: UNILEVER GLOBAL IP LIMITED, Wirral Merseyside CH62 4ZD (GB); Unilever IP Holdings B.V., 6708 WH Wageningen (NL)
(72) Inventor: GREENWOOD, William, James, Wirral Merseyside CH63 3JW (GB); POINTON, Thomas, Richard, Wirral Merseyside CH63 3JW (GB); THOMAS, Matthew, Rhys, Wirral Merseyside CH63 3JW (GB)
(74) Representative: Newbould, Frazer Anthony
(86) International application number: PCT/EP2019/070874
(87) International publication number: WO 2020/057845

(56) References cited:
- WO-A1-2012/123273
- WO-A2-97/46218
- CA-A1- 2 972 375
- DE-A1- 102013 226 426
- US-A1- 2013 111 675

## Description

The present invention relates to laundry compositions comprising itaconic acid.

CA 2 972 375 (P&G) discloses a fabric refresher composition comprising maleic and fumaric acid. DE 10 2013 226 426 (Henkel) discloses a liquid washing agent which may comprise maleic acid or fumaric acid.

US 2013/111675 (Soontravanich) discloses a linen sour treatment composition with iron control which comprises a hydrocarboxylic acid and an acid source. The acid source may be itaconic acid. WO 97/46218 (Ciba) discloses the use of a concentrated liquid detergent formulation comprising a mono or poly carboxylic acdi for disinfecting clothes.

Despite the prior art there remains a need for improved preserved laundry liquid compositions. The preservative needs to be stable in the laundry liquid composition and effective against the environmental microorganisms typically found in laundry compositions as a consequence of manufacturing processes. This need is to be distinguished from the need to exhibit an antimicrobial benefit to another article, for example a fabric or a surface. It is well known that the ability to provide a preservation benefit is not necessarily derivable from antimicrobial efficacy.

Accordingly, and in a first aspect, there is provided a laundry liquid composition comprising itaconic acid or a salt thereof according to claim 1.

The invention further relates to a method of preserving a laundry liquid composition using itaconic acid or salt tereof according to claim 7.

Compositions of the invention comprise itaconic acid or salt thereof.

Preferably the total level of itaconic acid or salt thereof is from 0.05 to 2 %wt of the total composition, more preferably 0.1 to 1.0 %wt. most preferably from 0.2 to 0.9 %wt.

Preferably, the pH of the composition is from 3.5 to 10 and more preferably from 4.0 to 6.5.

### Liquid laundry detergents

The term "laundry detergent" in the context of this invention denotes formulated compositions intended for and capable of wetting and cleaning domestic laundry such as clothing, linens and other household textiles. The term "linen" is often used to describe certain types of laundry items including bed sheets, pillow cases, towels, tablecloths, table napkins and uniforms. Textiles can include woven fabrics, non-woven fabrics, and knitted fabrics; and can include natural or synthetic fibres such as silk fibres, linen fibres, cotton fibres, polyester fibres, polyamide fibres such as nylon, acrylic fibres, acetate fibres, and blends thereof including cotton and polyester blends.

Examples of liquid laundry detergents include heavy-duty liquid laundry detergents for use in the wash cycle of automatic washing machines, as well as liquid fine wash and liquid colour care detergents such as those suitable for washing delicate garments (e.g. those made of silk or wool) either by hand or in the wash cycle of automatic washing machines.

The term "liquid" in the context of this invention denotes that a continuous phase or predominant part of the composition is liquid and that the composition is flowable at 15°C and above. Accordingly, the term "liquid" may encompass emulsions, suspensions, and compositions having flowable yet stiffer consistency, known as gels or pastes. The viscosity of the composition may suitably range from about 200 to about 10,000 mPa.s at 25°C at a shear rate of 21 sec⁻¹. This shear rate is the shear rate that is usually exerted on the liquid when poured from a bottle. Pourable liquid detergent compositions generally have a viscosity of from 200 to 1,500 mPa.s, preferably from 200 to 500 mPa.s.

Liquid detergent compositions which are pourable gels generally have a viscosity of from 1,500 mPa.s to 6,000 mPa.s, preferably from 1,500 mPa.s to 2,000 mPa.s.

A composition according to the invention may suitably have an aqueous continuous phase. By "aqueous continuous phase" is meant a continuous phase which has water as its basis. Compositions with an aqueous continuous phase will generally comprise from 15 to 95%, preferably from 20 to 90%, more preferably from 25 to 85% water (by weight based on the total weight of the composition).

A composition according to the invention may also have a low water content, for example when the composition is intended for packaging in polymeric film soluble in the wash water. Low water content compositions will generally comprise no more than 20%, and preferably no more than 10%, such as from 5 to 10% water (by weight based on the total weight of the composition).

The composition of the invention has a pH in the range of 3 to 7.5, more preferably 4 to 6.5, when measured on dilution of the composition to 1% using demineralised water.

A composition of the invention suitably comprises from 1 to 60%, preferably from 1.5 to 40%, and more preferably from 2 to 30% (by weight based on the total weight of the composition) of one or more detersive surfactants selected from non-soap anionic surfactants, nonionic surfactants and mixtures thereof.

The term "detersive surfactant" in the context of this invention denotes a surfactant which provides a detersive (i.e. cleaning) effect to laundry treated as part of a domestic laundering process.

Non-soap anionic surfactants for use in the invention are typically salts of organic sulfates and sulfonates having alkyl radicals containing from about 8 to about 22 carbon atoms, the term "alkyl" being used to include the alkyl portion of higher acyl radicals. Examples of such materials include alkyl sulfates, alkyl ether sulfates, alkaryl sulfonates, alpha-olefin sulfonates and mixtures thereof. The alkyl radicals preferably contain from 10 to 18 carbon atoms and may be unsaturated. The alkyl ether sulfates may contain from one to ten ethylene oxide or propylene oxide units per molecule, and preferably contain one to three ethylene oxide units per molecule. The counterion for anionic surfactants is generally an alkali metal such as sodium or potassium; or an ammoniacal counterion such as monoethanolamine, (MEA) diethanolamine (DEA) or triethanolamine (TEA). Mixtures of such counterions may also be employed.

A preferred class of non-soap anionic surfactant for use in the invention includes alkylbenzene sulfonates, particularly linear alkylbenzene sulfonates (LAS) with an alkyl chain length of from 10 to 18 carbon atoms. Commercial LAS is a mixture of closely related isomers and homologues alkyl chain homologues, each containing an aromatic ring sulfonated at the "*para*" position and attached to a linear alkyl chain at any position except the terminal carbons. The linear alkyl chain typically has a chain length of from 11 to 15 carbon atoms, with the predominant materials having a chain length of about C12. Each alkyl chain homologue consists of a mixture of all the possible sulfophenyl isomers except for the 1-phenyl isomer. LAS is normally formulated into compositions in acid (i.e. HLAS) form and then at least partially neutralized in-situ. However, it is preferred that the composition comprises less than 1% wt. linear alkylbenzene sulphonate surfactant and that the surfactant capability is instead based on anionic surfactants obtained and manufactured from sustainable sources.

Also suitable are alkyl ether sulfates having a straight or branched chain alkyl group having 10 to 18, more preferably 12 to 14 carbon atoms and containing an average of 1 to 3EO units per molecule. A preferred example is sodium lauryl ether sulfate (SLES) in which the predominantly C12 lauryl alkyl group has been ethoxylated with an average of 3EO units per molecule.

Some alkyl sulfate surfactant (PAS) may be used, such as non-ethoxylated primary and secondary alkyl sulphates with an alkyl chain length of from 10 to 18.

Mixtures of any of the above described materials may also be used.

In a composition of the invention the total level of anionic surfactant may suitably range from 0 to 15% by weight based on the total weight of the composition. However, it is preferred that the total level of anionic surfactant is from 2 to 15% wt., more preferably from 2 to 10% by wt., especially preferably from 3 to 8% wt.

Nonionic surfactants for use in the invention are typically polyoxyalkylene compounds, i.e. the reaction product of alkylene oxides (such as ethylene oxide or propylene oxide or mixtures thereof) with starter molecules having a hydrophobic group and a reactive hydrogen atom which is reactive with the alkylene oxide. Such starter molecules include alcohols, acids, amides or alkyl phenols. Where the starter molecule is an alcohol, the reaction product is known as an alcohol alkoxylate. The polyoxyalkylene compounds can have a variety of block and heteric (random) structures. For example, they can comprise a single block of alkylene oxide, or they can be diblock alkoxylates or triblock alkoxylates. Within the block structures, the blocks can be all ethylene oxide or all propylene oxide, or the blocks can contain a heteric mixture of alkylene oxides. Examples of such materials include C₈ to C₂₂ alkyl phenol ethoxylates with an average of from 5 to 25 moles of ethylene oxide per mole of alkyl phenol; and aliphatic alcohol ethoxylates such as C₈ to C₁₈ primary or secondary linear or branched alcohol ethoxylates with an average of from 2 to 40 moles of ethylene oxide per mole of alcohol.

A preferred class of nonionic surfactant for use in the invention includes aliphatic C₈ to C₁₈, more preferably C₁₂ to C₁₅ primary linear alcohol ethoxylates with an average of from 3 to 20, more preferably from 5 to 10 moles of ethylene oxide per mole of alcohol.

A further class of non-ionic surfactants include the alkyl poly glycosides and rhamnolipids.

Mixtures of any of the above described materials may also be used. Preferably, the total level of surfactant in the composition is from 10 to 30% wt. of the composition.

In a composition of the invention the total level of nonionic surfactant will preferably range from 2 to 25% (by weight based on the total weight of the composition).

Sustainably sourced raw materials.

It is understood that many of the materials described may be obtained from many sources. It is preferred that the materials described are obtained from sustainable sources, in particular avoiding the use of so called *black* carbon and instead using *green* carbon. Some of the processes which may be sued to obtain these materials are described below. Others also exist.

### Alcohol ethoxylate surfactants

SLES and other such alkali metal alkyl ether sulphate anionic surfactants are typically obtainable by sulphating alcohol ethoxylates. These alcohol ethoxylates are typically obtainable by ethoxylating linear alcohols. Similarly, primary alkyl sulphate surfactants (PAS) can be obtained from linear alcohols directly by sulphating the linear alcohol. Accordingly, forming the linear alcohol is a central step in obtaining both PAS and alkalimetal alkyl ether sulphate surfactants.

The linear alcohols which are suitable as an intermediate step in the manufacture of alcohol ethoxylates and therefore anionic surfactants such as sodium lauryl ether sulphate as well as non-ionic surfactants APGs etc. can be obtained from many different sustainable sources. These include:

### Primary sugars

Primary sugars are obtained from cane sugar or sugar beet, etc., and may be fermented to from bioethanol. The bioethanol is then dehydrated to form bio-ethylene which then can then be converted to olefins by processes such as the Shell Higher Olefin Process or the Chevron Phillips Full Range process. These alkenes can then processed into linear alcohols by hydroformylation followed by hydrogenation.

Alternatively, the ethylene can be converted directly to the fatty alcohol via the Ziegler process.

An alternative process also using primary sugars to form linear alcohols can be used and where the primary sugar undergoes microbial conversion by algae to form triglycerides. These triglycerides are then hydrolysed to linear fatty acids and which are then reduced to form the linear alcohols.

### Biomass

Biomass, for example forestry products, rice husks and straw to name a few may be processed into syngas [Synthesis Gas] by gasification. Through a *Fischer Tropsch* reaction these are processed into alkanes, which in turn are dehydrogenated to form olefins. These olefins may be processed in the same manner as the alkenes described above [primary sugars].

An alternative process turns the same biomass into polysaccharides by steam explosion which may be enzymatically degraded into secondary sugars. These secondary sugars are then fermented to form bioethanol which in turn is dehydrated to form bio-ethylene. This bio-ethylene is then processed into linear alcohols as described above [primary sugars].

### Waste Plastics

Waste plastic is pyrolyzed to form pyrolysis oil. This is then fractioned to form linear alkanes which are dehydrogenated to form alkenes. These alkenes are processed as described above [primary sugars].

Alternatively, the pyrolyzed oils are cracked to form ethylene which is then processed to form the required alkenes by the same processes described above in [primary sugars]. The alkenes are then processed into linear alcohols as described above [primary sugars].

### MSW (Municipal Solid Waste)

MSW is turned into syngas by gasification. From syngas it may be processed to alkanes as described above [Biomass] or it may be converted into ethanol by enzymatic processes (e.g. Lanzatech process) before being dehydrogenated into ethylene. The ethylene may then be turned into linear alcohols by the processes described above [primary sugars].

Syngas can also be converted to methanol and then on to ethylene. At which point the processes described in [primary sugars] convert it to the final fatty alcohol.

The MSW may also be turned into pyrolysis oil by gasification and then fractioned to form alkanes. These alkanes are then dehydrogenated to form olefins and then linear alcohols.

Equally, the organic fraction of MSW contains polysacharrides which can be broken down enzymatically into sugars. At which point they can be fermented to ethanol, dehydrated to ethylene and converted to the fatty alcohol via routes described above.

### Marine Carbon

There are various carbon sources from marine flora such as seaweed and kelp. From such marine flora the triglycerides can be separated from the source and which is then hydrolysed to form the fatty acids which are reduced to linear alcohols in the usual manner.

Alternatively, the raw material can be separated into polysaccharides which are enzymatically degraded to form secondary sugars. These may be fermented to form bioethanol and then processed as described above [Primary Sugars].

### Waste Oils

Waste oils such as used cooking oil can be physically separated into the triglycerides which are split to form linear fatty acids and then linear alcohols as described above.

Alternatively, the used cooking oil may be subjected to the Neste Process whereby the oil is catalytically cracked to form bio-ethylene. This is then processed as described above [primary sugars].

### Methane Capture

Methane capture methods capture methane from landfill sites, anaerobic digestion or from fossil fuel production. The methane may be formed into syngas by steam reforming. The syngas may then be processed as described by any of the processes previously described above.

Alternatively, the syngas may be turned into alkanes and then olefins by *Fischer Tropsch* and then dehydrogenation.

### Carbon Capture

Carbon dioxide may be captured by any of a variety of processes which are all well known. The carbon dioxide may be turned into carbon monoxide by a reverse water gas shift reaction and which in turn may be turned into Syngas by combining it with hydrogen gas formed by the electrolysis of water to produce hydrogen gas. The syngas is then processed as described above to form olefins and fatty alcohols.

Alternatively, the captured carbon dioxide is mixed with hydrogen gas before being enzymatically processed to form ethanol. This is a process which has been developed by Lanzatech. From here the ethanol is turned into ethylene and then processed into olefins and then linear alcohols as described above.

Captured carbon dioxide can also be used to feed CO2 utilizing algae. These algae can convert the CO2 into either fatty triglycerides or into ethanol depending on the type of algae that is used. Triglycerides can be hydrolysed and converted into useful hydrocarbons by the same processes described in [Marine Carbon and Waste Oils]. Ethanol can be processed as per the processes described in [primary sugars].

Lastly CO2 can be converted biologically into bio-acetaldehyde using H2 generated though electrolysis. Acetaldehyde can then be converted through conventional chemical methods to useful hydrocarbons.

### LAS

One of the other main surfactants commonly used in cleaning compositions, in particular laundry compositions is LAS (linear alkyl benzene sulphonate).

The key intermediate compound in the manufacture of LAS is the relevant alkene. These alkenes (olefins) may be produced by any of the methods described above and may be formed from primary sugars, biomass, waste plastic, MSW, carbon capture, methane capture, marine carbon to name a few.

Whereas in the processed described above the olefin is processed to form linear alcohols by hydroformylation and oxidation instead, the olefin is reacted with benzene and then sulphonate to form the LAS.

### NON-AQUEOUS CARRIERS

A composition of the invention may incorporate non-aqueous carriers such as hydrotropes, cosolvents and phase stabilizers. Such materials are typically low molecular weight, water-soluble or water-miscible organic liquids such as C1 to C5 monohydric alcohols (such as ethanol and n- or i-propanol); C2 to C6 diols (such as monopropylene glycol and dipropylene glycol); C3 to C9 triols (such as glycerol); polyethylene glycols having a weight average molecular weight (M_{w}) ranging from about 200 to 600; C1 to C3 alkanolamines such as mono-, di- and triethanolamines; and alkyl aryl sulfonates having up to 3 carbon atoms in the lower alkyl group (such as the sodium and potassium xylene, toluene, ethylbenzene and isopropyl benzene (cumene) sulfonates).

Mixtures of any of the above described materials may also be used.

Non-aqueous carriers, when included, may be present in an amount ranging from 0.1 to 20%, preferably from 1 to 15%, and more preferably from 3 to 12% (by weight based on the total weight of the composition).

### COSURFACTANTS

A composition of the invention may contain one or more cosurfactants (such as amphoteric (zwitterionic) and/or cationic surfactants) in addition to the non-soap anionic and/or nonionic detersive surfactants described above.

Specific cationic surfactants include C8 to C18 alkyl dimethyl ammonium halides and derivatives thereof in which one or two hydroxyethyl groups replace one or two of the methyl groups, and mixtures thereof. Cationic surfactant, when included, may be present in an amount ranging from 0.1 to 5% (by weight based on the total weight of the composition).

Specific amphoteric (zwitterionic) surfactants include alkyl amine oxides, alkyl betaines, alkyl amidopropyl betaines, alkyl sulfobetaines (sultaines), alkyl glycinates, alkyl carboxyglycinates, alkyl amphoacetates, alkyl amphopropionates, alkylamphoglycinates, alkyl amidopropyl hydroxysultaines, acyl taurates and acyl glutamates, having alkyl radicals containing from about 8 to about 22 carbon atoms, the term "alkyl" being used to include the alkyl portion of higher acyl radicals. Amphoteric (zwitterionic) surfactant, when included, may be present in an amount ranging from 0.1 to 5% (by weight based on the total weight of the composition).

Mixtures of any of the above described materials may also be used.

### POLYAMINES

The ethoxylated polyamines (EPEI) are generally linear or branched poly (>2) amines. The amines may be primary, secondary or tertiary. A single or a number of amine functions are reacted with one or more alkylene oxide groups to form a polyalkylene oxide side chain. The alkylene oxide can be a homopolymer (for example ethylene oxide) or a random or block copolymer. The terminal group of the alkylene oxide side chain can be further reacted to give an anionic character to the molecule (for example to give carboxylic acid or sulphonic acid functionality).

The composition comprises from about 0.01% to about 5% polyamine. Preferably, the polyamine is a soil release agent comprising a polyamine backbone corresponding to the formula: 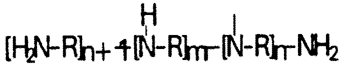
having a modified polyamine formula V(n+1)WmYnZ, or a polyamine backbone corresponding to the formula: 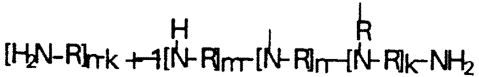 having a modified polyamine formula V(nk+1)WmYnY'kZ,
wherein k is less than or equal to n,

Preferably, the polyamine backbone prior to modification has a molecular weight greater than about 200 daltons.

Preferably,
i) V units are terminal units having the formula: 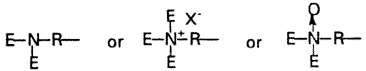
ii) W units are backbone units having the formula 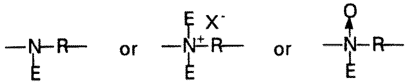
iii) Y units are branching units having the formula: and 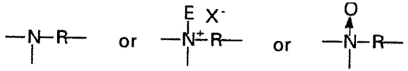
iv) Z units are terminal units having the formula:

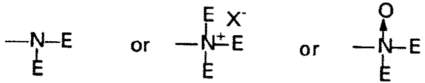

Preferably, backbone linking R units are selected from the group consisting of C2-C12 alkylene, - (R1O)xR3 (OR1)x-, -(CH₂CH(OR2)CH₂O)z(R1O)yR1(OCH₂CH(OR2)CH₂)w-, -CH₂CH(OR2)CH₂- and mixtures thereof,
provided that when R comprises C1-C12 alkylene R also comprises at least one-(R1O)xR3(OR1)x-, -(CH₂CH(OR2)CH₂O)z(R1O)yR1- (OCH₂CH(OR2)CH₂)w-, or-CH₂CH(OR2)CH₂-unit;

Preferably, R1 is C2-C6 alkylene and mixtures thereof;

Preferably, R2 is hydrogen, (R1O)XB, and mixtures thereof;

Preferably, R3 is C1-C12 alkylene, C3-C12 hydroxyalkylene, C4-C12 dihydroxy-alkylene, C8-C12 dialkylarylene, -C(O)-, -C(O)NHR5NHC(O)-, C(O)(R4)rC(O)-, -CH₂CH(OH)CH₂O(R1O)yR1O-CH₂CH(OH)CH₂-, and mixtures thereof;

Preferably, R4 is C1-C12 alkylene, C4-C12 alkenylene, C8-C12 arylalkylene, C6-C10 arylene, and mixtures thereof;

Preferably, R5 is C2-C12 alkylene or C6 C12 arylene;

Preferably, E units are selected from the group consisting of (CH₂)p-CO₂M, -(CH₂)qSO₃M,-CH(CH₂CO₂M)CO₂M, (CH₂)pPO₃M, -(R1O)xB, and mixtures thereof,

Preferably, B is hydrogen, -(CH₂)qSO₃M, -(CH₂)pCO₂M, -(CH₂)q CH(SO₃M)CH₂SO₃M,-(CH₂)qCH(SO₂M)CH₂SO₃M, - (CH2)pPO₃M, -PO₃M, and mixtures thereof,

Preferably, M is hydrogen or a water soluble cation in sufficient amount to satisfy charge balance;

Preferably X is a water soluble anion;

Preferably k has the value from 0 to about 20;

Preferably m has the value from 4 to about 400;

Preferably n has the value from 0 to about 200;

Preferably p has the value from 1 to 6,

Preferably q has the value from 0 to 6;

Preferably r has the value 0 or 1;

Preferably w has the value 0 or 1;

Preferably x has the value from 1 to 100;

Preferably y has the value from 0 to 100; and

Preferably z has the value 0 or 1.

### BUILDERS

A composition of the invention may contain one or more builders. Builders enhance or maintain the cleaning efficiency of the surfactant, primarily by reducing water hardness. This is done either by sequestration or chelation (holding hardness minerals in solution), by precipitation (forming an insoluble substance), or by ion exchange (trading electrically charged particles).

Builders for use in the invention can be of the organic or inorganic type, or a mixture thereof.

Suitable inorganic builders include hydroxides, carbonates, sesquicarbonates, bicarbonates, silicates, zeolites, and mixtures thereof. Specific examples of such materials include sodium and potassium hydroxide, sodium and potassium carbonate, sodium and potassium bicarbonate, sodium sesquicarbonate, sodium silicate and mixtures thereof.

Suitable organic builders include polycarboxylates, in acid and/or salt form. When utilized in salt form, alkali metal (e.g. sodium and potassium) or alkanolammonium salts are preferred. Specific examples of such materials include sodium and potassium citrates, sodium and potassium tartrates, the sodium and potassium salts of tartaric acid monosuccinate, the sodium and potassium salts of tartaric acid disuccinate, sodium and potassium ethylenediaminetetraacetates, sodium and potassium N(2-hydroxyethyl)-ethylenediamine triacetates, sodium and potassium nitrilotriacetates and sodium and potassium N-(2-hydroxyethyl)-nitrilodiacetates. Polymeric polycarboxylates may also be used, such as polymers of unsaturated monocarboxylic acids (e.g. acrylic, methacrylic, vinylacetic, and crotonic acids) and/or unsaturated dicarboxylic acids (e.g. maleic, fumaric, itaconic, mesaconic and citraconic acids and their anhydrides). Specific examples of such materials include polyacrylic acid, polymaleic acid, and copolymers of acrylic and maleic acid. The polymers may be in acid, salt or partially neutralised form and may suitably have a molecular weight (Mw) ranging from about 1,000 to 100,000, preferably from about 2,000 to about 85,000, and more preferably from about 2,500 to about 75,000

Mixtures of any of the above described materials may also be used. Preferred builders for use in the invention may be selected from polycarboxylates (e.g. citrates) in acid and/or salt form and mixtures thereof.

Builder, when included, may be present in an amount ranging from about 0.1 to about 20%, preferably from about 0.5 to about 15%, more preferably from about 1 to about 10% (by weight based on the total weight of the composition).

### FATTY ACID

A composition of the invention will preferably contain one or more fatty acids and/ or salts thereof. Suitable fatty acids in the context of this invention include aliphatic carboxylic acids of formula RCOOH, where R is a linear or branched alkyl or alkenyl chain containing from 6 to 24, more preferably 10 to 22, most preferably from 12 to 18 carbon atoms and 0 or 1 double bond. Preferred examples of such materials include saturated C12-18 fatty acids such as lauric acid, myristic acid, palmitic acid or stearic acid; and fatty acid mixtures in which 50 to 100% (by weight based on the total weight of the mixture) consists of saturated C12-18 fatty acids. Such mixtures may typically be derived from natural fats and/or optionally hydrogenated natural oils (such as coconut oil, palm kernel oil or tallow).

The fatty acids may be present in the form of their sodium, potassium or ammonium salts and/or in the form of soluble salts of organic bases, such as mono-, di- or triethanolamine.

Mixtures of any of the above described materials may also be used.

Fatty acids and/or their salts, when included, may be present in an amount ranging from about 0.25 to 5%, more preferably from 0.5 to 5%, most preferably from 0.75 to 4% (by weight based on the total weight of the composition).

For formula accounting purposes, in the formulation, fatty acids and/or their salts (as defined above) are not included in the level of surfactant or in the level of builder.

### POLYMERIC CLEANING BOOSTERS

To further improve the environmental profile of liquid laundry detergents it may be preferred in some cases to reduce the volume of laundry detergent dosed per wash-load and to add various highly weight efficient ingredients to the composition to boost cleaning performance. In addition to the soil release polymers of the invention described above, a composition of the invention will preferably contain one or more additional polymeric cleaning boosters such as anti-redeposition polymers.

Anti-redeposition polymers stabilise the soil in the wash solution thus preventing redeposition of the soil. Suitable soil release polymers for use in the invention include alkoxylated polyethyleneimines.

Polyethyleneimines are materials composed of ethylene imine units -CH₂CH₂NH- and, where branched, the hydrogen on the nitrogen is replaced by another chain of ethylene imine units. Preferred alkoxylated polyethyleneimines for use in the invention have a polyethyleneimine backbone of about 300 to about 10000 weight average molecular weight (M_{w}). The polyethyleneimine backbone may be linear or branched. It may be branched to the extent that it is a dendrimer. The alkoxylation may typically be ethoxylation or propoxylation, or a mixture of both. Where a nitrogen atom is alkoxylated, a preferred average degree of alkoxylation is from 10 to 30, preferably from 15 to 25 alkoxy groups per modification. A preferred material is ethoxylated polyethyleneimine, with an average degree of ethoxylation being from 10 to 30, preferably from 15 to 25 ethoxy groups per ethoxylated nitrogen atom in the polyethyleneimine backbone.

Mixtures of any of the above described materials may also be used.

When included, a composition of the invention will preferably comprise from 0.25 to 8%, more preferably from 0.5 to 6% (by weight based on the total weight of the composition) of one or more anti-redeposition polymers such as, for example, the alkoxylated polyethyleneimines which are described above.

### SOIL RELEASE POLYMERS

Soil release polymers help to improve the detachment of soils from fabric by modifying the fabric surface during washing. The adsorption of a SRP over the fabric surface is promoted by an affinity between the chemical structure of the SRP and the target fibre.

SRPs for use in the invention may include a variety of charged (e.g. anionic) as well as non-charged monomer units and structures may be linear, branched or star-shaped. The SRP structure may also include capping groups to control molecular weight or to alter polymer properties such as surface activity. The weight average molecular weight (M_{w}) of the SRP may suitably range from about 1000 to about 20,000 and preferably ranges from about 1500 to about 10,000.

SRPs for use in the invention may suitably be selected from copolyesters of dicarboxylic acids (for example adipic acid, phthalic acid or terephthalic acid), diols (for example ethylene glycol or propylene glycol) and polydiols (for example polyethylene glycol or polypropylene glycol). The copolyester may also include monomeric units substituted with anionic groups, such as for example sulfonated isophthaloyl units. Examples of such materials include oligomeric esters produced by transesterification/oligomerization of poly(ethyleneglycol) methyl ether, dimethyl terephthalate ("DMT"), propylene glycol ("PG") and poly(ethyleneglycol) ("PEG"); partly- and fully-anionic-endcapped oligomeric esters such as oligomers from ethylene glycol ("EG"), PG, DMT and Na-3,6-dioxa-8-hydroxyoctanesulfonate; nonionic-capped block polyester oligomeric compounds such as those produced from DMT, Me-capped PEG and EG and/or PG, or a combination of DMT, EG and/or PG, Me-capped PEG and Na-dimethyl-5-sulfoisophthalate, and copolymeric blocks of ethylene terephthalate or propylene terephthalate with polyethylene oxide or polypropylene oxide terephthalate

Other types of SRP for use in the invention include cellulosic derivatives such as hydroxyether cellulosic polymers, C₁-C₄alkylcelluloses and C₄hydroxyalkyl celluloses; polymers with poly(vinyl ester) hydrophobic segments such as graft copolymers of poly(vinyl ester), for example C₁-C₆vinyl esters (such as poly(vinyl acetate)) grafted onto polyalkylene oxide backbones; poly(vinyl caprolactam) and related co-polymers with monomers such as vinyl pyrrolidone and/or dimethylaminoethyl methacrylate; and polyester-polyamide polymers prepared by condensing adipic acid, caprolactam, and polyethylene glycol.

Preferred SRPs for use in the invention include copolyesters formed by condensation of terephthalic acid ester and diol, preferably 1,2 propanediol, and further comprising an end cap formed from repeat units of alkylene oxide capped with an alkyl group. Examples of such materials have a structure corresponding to general formula (I): 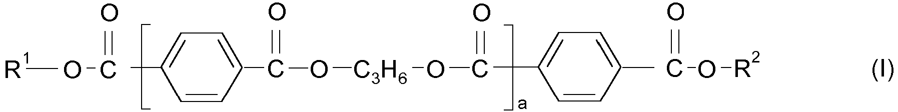
in which R¹ and R² independently of one another are X-(OC₂H₄)ₙ₋(OC₃H₆)ₘ;
in which X is C₁₄ alkyl and preferably methyl;
n is a number from 12 to 120, preferably from 40 to 50;
m is a number from 1 to 10, preferably from 1 to 7; and
a is a number from 4 to 9.

Because they are averages, m, n and a are not necessarily whole numbers for the polymer in bulk.

Mixtures of any of the above described materials may also be used.

The overall level of SRP, when included, may range from 0.1 to 10%, preferably from 0.3 to 7%, more preferably from 0.5 to 5% (by weight based on the total weight of the composition).

Suitable soil release polymers are described in greater detail in U. S. Patent Nos. 5,574,179; 4,956,447; 4,861,512; 4,702,857, WO 2007/079850 and WO2016/005271. If employed, soil release polymers will typically be incorporated into the liquid laundry detergent compositions herein in concentrations ranging from 0.01 percent to 10 percent, more preferably from 0.1 percent to 5 percent, by weight of the composition.

### POLYMERIC THICKENERS

A composition of the invention may comprise one or more polymeric thickeners. Suitable polymeric thickeners for use in the invention include hydrophobically modified alkali swellable emulsion (HASE) copolymers. Exemplary HASE copolymers for use in the invention include linear or crosslinked copolymers that are prepared by the addition polymerization of a monomer mixture including at least one acidic vinyl monomer, such as (meth)acrylic acid (i.e. methacrylic acid and/or acrylic acid); and at least one associative monomer. The term "associative monomer" in the context of this invention denotes a monomer having an ethylenically unsaturated section (for addition polymerization with the other monomers in the mixture) and a hydrophobic section. A preferred type of associative monomer includes a polyoxyalkylene section between the ethylenically unsaturated section and the hydrophobic section. Preferred HASE copolymers for use in the invention include linear or crosslinked copolymers that are prepared by the addition polymerization of (meth)acrylic acid with (i) at least one associative monomer selected from linear or branched C₈-C₄₀ alkyl (preferably linear C₁₂₋C₂₂ alkyl) polyethoxylated (meth)acrylates; and (ii) at least one further monomer selected from C₁-C₄ alkyl (meth) acrylates, polyacidic vinyl monomers (such as maleic acid, maleic anhydride and/or salts thereof) and mixtures thereof. The polyethoxylated portion of the associative monomer (i) generally comprises about 5 to about 100, preferably about 10 to about 80, and more preferably about 15 to about 60 oxyethylene repeating units.

Mixtures of any of the above described materials may also be used.

When included, a composition of the invention will preferably comprise from 0.1 to 5% (by weight based on the total weight of the composition) of one or more polymeric thickeners such as, for example, the HASE copolymers which are described above.

### FLUORESCENT AGENTS

It may be advantageous to include fluorescer in the compositions. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.5 wt %.

Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra, Tinopal 5BMGX, and Blankophor (Trade Mark) HRH, and Pyrazoline compounds, e.g. Blankophor SN.

Preferred fluorescers are: sodium 2 (4-styryl-3-sulfophenyl)-2H-napthol[1,2-d]thazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino}stilbene-2-2' disulfonate, and disodium 4,4'-bis(2-sulfoslyryl)biphenyl.

### SHADING DYES

Shading dye can be used to improve the performance of the compositions. Preferred dyes are violet or blue. It is believed that the deposition on fabrics of a low level of a dye of these shades, masks yellowing of fabrics. A further advantage of shading dyes is that they can be used to mask any yellow tint in the composition itself.

Suitable and preferred classes of dyes are discussed below.

### Direct Dyes:

Direct dyes (otherwise known as substantive dyes) are the class of water soluble dyes which have an affinity for fibres and are taken up directly. Direct violet and direct blue dyes are preferred.

Preferably bis-azo or tris-azo dyes are used.

Most preferably, the direct dye is a direct violet of the following structures: 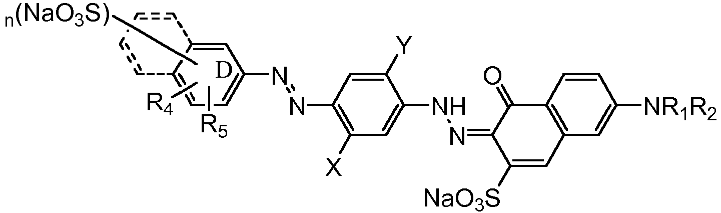 or 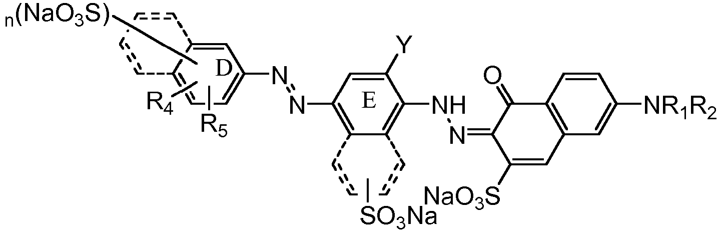 wherein:
ring D and E may be independently naphthyl or phenyl as shown;
R₁ is selected from: hydrogen and C₁-C₄-alkyl, preferably hydrogen;
R₂ is selected from: hydrogen, C₁-C₄-alkyl, substituted or unsubstituted phenyl and substituted or unsubstituted naphthyl, preferably phenyl;
R₃ and R₄ are independently selected from: hydrogen and C₁-C₄-alkyl, preferably hydrogen or methyl;
X and are independently selected from: hydrogen, C₁-C₄-alkyl and C₁-C₄-alkoxy; preferably the dye has X= methyl; and, Y = methoxy and n is 0, 1 or 2, preferably 1 or 2.

Preferred dyes are direct violet 7, direct violet 9, direct violet 11, direct violet 26, direct violet 31, direct violet 35, direct violet 40, direct violet 41, direct violet 51, and direct violet 99. Bis-azo copper containing dyes for example direct violet 66 may be used. The benzidene based dyes are less preferred.

Preferably the direct dye is present at 0.000001 to 1 wt% more preferably 0.00001 wt% to 0.0010 wt% of the composition.

In another embodiment the direct dye may be covalently linked to the photo-bleach, for example as described in WO2006/024612.

### Acid dyes:

Cotton substantive acid dyes give benefits to cotton containing garments. Preferred dyes and mixes of dyes are blue or violet. Preferred acid dyes are:
(i) azine dyes, wherein the dye is of the following core structure: 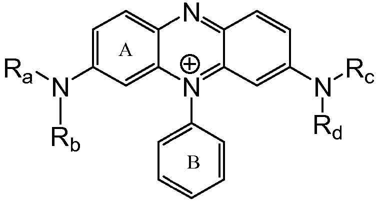
   wherein Rₐ, R_{b}, R_{c} and R_{d} are selected from: H, a branched or linear C1 to C7-alkyl chain, benzyl a phenyl, and a naphthyl;
   the dye is substituted with at least one SO₃⁻ or -COO⁻group;
   the B ring does not carry a negatively charged group or salt thereof; and
   the A ring may further substituted to form a naphthyl; the dye is optionally substituted by groups selected from: amine, methyl, ethyl, hydroxyl, methoxy, ethoxy, phenoxy, Cl, Br, I, F, and NO₂.

Preferred azine dyes are: acid blue 98, acid violet 50, and acid blue 59, more preferably acid violet 50 and acid blue 98.

Other preferred non-azine acid dyes are acid violet 17, acid black 1 and acid blue 29.

Preferably the acid dye is present at 0.0005 wt% to 0.01 wt% of the formulation.

### Hydrophobic dyes:

The composition may comprise one or more hydrophobic dyes selected from benzodifuranes, methine, triphenylmethanes, napthalimides, pyrazole, napthoquinone, anthraquinone and mono-azo or di-azo dye chromophores. Hydrophobic dyes are dyes which do not contain any charged water solubilising group. Hydrophobic dyes may be selected from the groups of disperse and solvent dyes. Blue and violet anthraquinone and mono-azo dye are preferred.

Preferred dyes include solvent violet 13, disperse violet 27 disperse violet 26, disperse violet 28, disperse violet 63 and disperse violet 77.

Preferably the hydrophobic dye is present at 0.0001 wt% to 0.005 wt% of the formulation.

### Basic dyes:

Basic dyes are organic dyes which carry a net positive charge. They deposit onto cotton. They are of particular utility for used in composition that contain predominantly cationic surfactants. Dyes may be selected from the basic violet and basic blue dyes listed in the Colour Index International.

Preferred examples include triarylmethane basic dyes, methane basic dye, anthraquinone basic dyes, basic blue 16, basic blue 65, basic blue 66, basic blue 67, basic blue 71, basic blue 159, basic violet 19, basic violet 35, basic violet 38, basic violet 48; basic blue 3, basic blue 75, basic blue 95, basic blue 122, basic blue 124, basic blue 141.

### Reactive dyes:

Reactive dyes are dyes which contain an organic group capable of reacting with cellulose and linking the dye to cellulose with a covalent bond. They deposit onto cotton.

Preferably the reactive group is hydrolysed or reactive group of the dyes has been reacted with an organic species for example a polymer, so as to the link the dye to this species. Dyes may be selected from the reactive violet and reactive blue dyes listed in the Colour Index International.

Preferred examples include reactive blue 19, reactive blue 163, reactive blue 182 and reactive blue, reactive blue 96.

### Dye conjugates:

Dye conjugates are formed by binding direct, acid or basic dyes to polymers or particles via physical forces. Dependent on the choice of polymer or particle they deposit on cotton or synthetics. A description is given in WO2006/055787.

Particularly preferred dyes are: direct violet 7, direct violet 9, direct violet 11, direct violet 26, direct violet 31, direct violet 35, direct violet 40, direct violet 41, direct violet 51, direct violet 99, acid blue 98, acid violet 50, acid blue 59, acid violet 17, acid black 1, acid blue 29, solvent violet 13, disperse violet 27 disperse violet 26, disperse violet 28, disperse violet 63, disperse violet 77 and mixtures thereof.

Shading dye can be used in the absence of fluorescer, but it is especially preferred to use a shading dye in combination with a fluorescer, for example in order to reduce yellowing due to chemical changes in adsorbed fluorescer.

### EXTERNAL STRUCTURANTS

Compositions of the invention may have their rheology further modified by use of one or more external structurants which form a structuring network within the composition. Examples of such materials include hydrogenated castor oil, microfibrous cellulose and citrus pulp fibre. The presence of an external structurant may provide shear thinning rheology and may also enable materials such as encapsulates and visual cues to be suspended stably in the liquid.

### ENZYMES

A composition of the invention may comprise an effective amount of one or more enzyme selected from the group comprising, pectate lyase, protease, amylase, cellulase, lipase, mannanase and mixtures thereof. The enzymes are preferably present with corresponding enzyme stabilizers.

### FRAGRANCES

Examples of fragrant components include aromatic, aliphatic and araliphatic hydrocarbons having molecular weights from about 90 to about 250; aromatic, aliphatic and araliphatic esters having molecular weights from about 130 to about 250; aromatic, aliphatic and araliphatic nitriles having molecular weights from about 90 to about 250; aromatic, aliphatic and araliphatic alcohols having molecular weights from about 90 to about 240; aromatic, aliphatic and araliphatic ketones having molecular weights from about 150 to about 270; aromatic, aliphatic and araliphatic lactones having molecular weights from about 130 to about 290; aromatic, aliphatic and araliphatic aldehydes having molecular weights from about 90 to about 230; aromatic, aliphatic and araliphatic ethers having molecular weights from about 150 to about 270; and condensation products of aldehydes and amines having molecular weights from about 180 to about 320.

Specific examples of fragrant components for use in the invention include:
i) hydrocarbons, such as, for example, D-limonene, 3-carene, α-pinene, β-pinene, α-terpinene, γ-terpinene, p-cymene, bisabolene, camphene, caryophyllene, cedrene, farnesene, longifolene, myrcene, ocimene, valencene, (*E,Z*)-1,3,5-undecatriene, styrene, and diphenylmethane;
ii) aliphatic and araliphatic alcohols, such as, for example, benzyl alcohol, 1-phenylethyl alcohol, 2-phenylethyl alcohol, 3-phenylpropanol, 2-phenylpropanol, 2-phenoxyethanol, 2,2-dimethyl-3-phenylpropanol, 2,2-dimethyl-3-(3-methylphenyl)propanol, 1,1-dimethyl-2-phenylethyl alcohol, 1,1-dimethyl-3-phenylpropanol, 1-ethyl-1-methyl-3-phenylpropanol, 2-methyl-5-phenylpentanol, 3-methyl-5-phenylpentanol, 3-phenyl-2-propen-1-ol, 4-methoxybenzyl alcohol, 1-(4-isopropylphenyl)ethanol, hexanol, octanol, 3-octanol, 2,6-dimethylheptanol, 2-methyl-2-heptanol, 2-methyl-2-octanol, (E)-2-hexenol, (E)- and (Z)-3-hexenol, 1-octen-3-ol, a mixture of 3,4,5,6,6-pentamethyl-3/4-hepten-2-ol and 3,5,6,6-tetramethyl-4-methyleneheptan-2-ol, (E,Z)-2,6-nonadienol, 3,7-dimethyl-7-methoxyoctan-2-ol, 9-decenol, 10-undecenol, and 4-methyl-3-decen-5-ol;
iii) cyclic and cycloaliphatic alcohols, such as, for example, 4-tert-butylcyclohexanol, 3,3,5-trimethylcyclohexanol, 3-isocamphylcyclohexanol, 2,6,9-trimethyl-Z2,Z5,E9-cyclododecatrien-1-ol, 2-isobutyl-4-methyltetrahydro-2H-pyran-4-ol, alpha, 3,3-trimethylcyclo-hexylmethanol, 2-methyl-4-(2,2,3-trimethyl-3-cyclopent-1-yl)butanol, 2-methyl-4-(2,2,3-trimethyl-3-cyclopent-1-yl)-2-buten-1-ol, 2-ethyl-4-(2,2,3-trimethyl-3-cyclopent-1-yl)-2-buten-1-ol, 3-methyl-5-(2,2,3-trimethyl-3-cyclopent-1-yl)-pentan-2-ol, 3-methyl-5-(2,2,3-trimethyl-3-cyclopent-1-yl)-4-penten-2-ol, 3,3-dimethyl-5-(2,2,3-trimethyl-3-cyclopent-1-yl)-4-penten-2-ol, 1-(2,2,6-trimethylcyclohexyl)pentan-3-ol, and 1-(2,2,6-trimethylcyclohexyl)hexan-3-ol;
iv) aliphatic aldehydes and their acetals, such as, for example, hexanal, heptanal, octanal, nonanal, decanal, undecanal, dodecanal, tridecanal, 2-methyloctanal, 2-methylnonanal, 2-methylundecanal, (E)-2-hexenal, (Z)-4-heptenal, 2,6-dimethyl-5-heptenal, 10-undecenal, (E)-4-decenal, 2-dodecenal, 2,6,10-trimethyl-5,9-undecadienal, heptanal-diethylacetal, 1,1-dimethoxy-2,2,5-trimethyl-4-hexene, and citronellyl oxyacetaldehyde;
v) aliphatic ketones and oximes thereof, such as, for example, 2-heptanone, 2-octanone, 3-octanone, 2-nonanone, 5-methyl-3-heptanone, 5-methyl-3-heptanone oxime, and 2,4,4,7-tetramethyl-6-octen-3-one;
vi) aliphatic sulfur-containing compounds, such as, for example, 3-methylthiohexanol, 3-methylthiohexyl acetate, 3-mercaptohexanol, 3-mercaptohexyl acetate, 3-mercaptohexyl butyrate, 3-acetylthiohexyl acetate, and 1-menthene-8-thiol;
vii) aliphatic nitriles, such as, for example, 2-nonenenitrile, 2-tridecenenitrile, 2,12-tridecenenitrile, 3,7-dimethyl-2,6-octadienenitrile, and 3,7-dimethyl-6-octenenitrile;
viii) aliphatic carboxylic acids and esters thereof, such as, for example, (E)- and (Z)-3-hexenylformate, ethyl acetoacetate, isoamyl acetate, hexyl acetate, 3,5,5-trimethylhexyl acetate, 3-methyl-2-butenyl acetate, (E)-2-hexenyl acetate, (E)- and (Z)-3-hexenyl acetate, octyl acetate, 3-octyl acetate, 1-octen-3-yl acetate, ethyl butyrate, butyl butyrate, isoamyl butyrate, hexylbutyrate, (E)- and (Z)-3-hexenyl isobutyrate, hexyl crotonate, ethylisovalerate, ethyl-2-methyl pentanoate, ethyl hexanoate, allyl hexanoate, ethyl heptanoate, allyl heptanoate, ethyl octanoate, ethyl-(E,Z)-2,4-decadienoate, methyl-2-octinate, methyl-2-noninate, allyl-2-isoamyl oxyacetate, and methyl-3,7-dimethyl-2,6-octadienoate;
ix) acyclic terpene alcohols, such as, for example, citronellol; geraniol; nerol; linalool; lavandulol; nerolidol; farnesol; tetrahydrolinalool; tetrahydrogeraniol; 2,6-dimethyl-7-octen-2-ol; 2,6-dimethyloctan-2-ol; 2-methyl-6-methylene-7-octen-2-ol; 2,6-dimethyl-5,7-octadien-2-ol; 2,6-dimethyl-3,5-octadien-2-ol; 3,7-dimethyl-4,6-octadien-3-ol; 3,7-dimethyl-1,5,7-octatrien-3-ol 2,6-dimethyl-2,5,7-octatrien-1-ol; as well as formates, acetates, propionates, isobutyrates, butyrates, isovalerates, pentanoates, hexanoates, crotonates, tiglinates and 3-methyl-2-butenoates thereof;
x) acyclic terpene aldehydes and ketones, such as, for example, geranial, neral, citronellal, 7-hydroxy-3,7-dimethyloctanal, 7-methoxy-3,7-dimethyloctanal, 2,6,10-trimethyl-9-undecenal, α-sinensal, β-sinensal, geranylacetone, as well as the dimethyl- and diethylacetals of geranial, neral and 7-hydroxy-3,7-dimethyloctanal;
xi) cyclic terpene alcohols, such as, for example, menthol, isopulegol, alpha-terpineol, terpinen-4-ol, menthan-8-ol, menthan-1-ol, menthan-7-ol, borneol, isoborneol, linalool oxide, nopol, cedrol, ambrinol, vetiverol, guaiol, and the formates, acetates, propionates, isobutyrates, butyrates, isovalerates, pentanoates, hexanoates, crotonates, tiglinates and 3-methyl-2-butenoates of alpha-terpineol, terpinen-4-ol, methan-8-ol, methan-1-ol, methan-7-ol, borneol, isoborneol, linalool oxide, nopol, cedrol, ambrinol, vetiverol, and guaiol;
xii) cyclic terpene aldehydes and ketones, such as, for example, menthone, isomenthone, 8-mercaptomenthan-3-one, carvone, camphor, fenchone, α-ionone, β-ionone, α-n-methylionone, β-n-methylionone, α-isomethylionone, β-isomethylionone, alpha-irone, α-damascone, β-damascone, β-damascenone, δ-damascone, γ-damascone, 1-(2,4,4-trimethyl-2-cyclohexen-1-yl)-2-buten-1-one, 1,3,4,6,7,8a-hexahydro-1,1,5,5-tetramethyl-2H-2,4a-methanonaphthalen-8(5H)-one, nootkatone, dihydronootkatone and cedryl methyl ketone;
xiii) cyclic and cycloaliphatic ethers, such as, for example, cineole, cedryl methyl ether, cyclododecyl methyl ether, (ethoxymethoxy)cyclododecane; alpha-cedrene epoxide, 3a,6,6,9a-tetramethyldodecahydronaphtho[2,1-b]furan, 3a-ethyl-6,6,9a-trimethyldodecahydronaphtho[2,1-b]furan, 1,5,9-trimethyl-13-oxabicyclo[10.1.0]-trideca-4,8-diene, rose oxide and 2-(2,4-dimethyl-3-cyclohexen-1-yl)-5-methyl-5-(1-methylpropyl)-1,3-dioxane;
xiv) cyclic ketones, such as, for example, 4-tert-butylcyclohexanone, 2,2,5-trimethyl-5-pentylcyclopentanone, 2-heptylcyclopentanone, 2-pentylcyclopentanone, 2-hydroxy-3-methyl-2-cyclopenten-1-one, 3-methyl-cis-2-penten-1-yl-2-cyclopenten-1-one, 3-methyl-2-pentyl-2-cyclopenten-1-one, 3-methyl-4-cyclopentadecenone, 3-methyl-5-cyclopentadecenone, 3-methylcyclopentadecanone, 4-(1-ethoxyvinyl)-3,3,5,5-tetramethylcyclohexanone, 4-tert-pentylcyclohexanone, 5-cyclohexadecen-1-one, 6,7-dihydro-1,1,2,3,3-pentamethyl-4(5H)-indanone, 5-cyclohexadecen-1-one, 8-cyclohexadecen-1-one, 9-cycloheptadecen-1-one and cyclopentadecanone;
xv) cycloaliphatic aldehydes and ketones, such as, for example, 2,4-dimethyl-3-cyclohexene carbaldehyde, 2-methyl-4-(2,2,6-trimethyl-cyclohexen-1-yl)-2-butenal, 4-(4-hydroxy-4-methylpentyl)-3-cyclohexene carbaldehyde, 4-(4-methyl-3-penten-1-yl)-3-cyclohexene carbaldehyde, 1-(3,3-dimethylcyclohexyl)-4-penten-1-one, 1-(5,5-dimethyl-1-cyclohexen-1-yl)-4-penten-1-one, 2,3,8,8-tetramethyl-1,2,3,4,5,6,7,8-octahydro-2-naphtalenyl methyl-ketone, methyl-2,6,10-trimethyl-2,5,9-cyclododecatrienyl ketone and tert-butyl-(2,4-dimethyl-3-cyclohexen-1-yl) ketone;
xvi) esters of cyclic alcohols, such as, for example, 2-tert-butylcyclohexyl acetate, 4-tert-butylcyclohexyl acetate, 2-tert-pentylcyclohexyl acetate, 4-tert-pentylcyclohexyl acetate, decahydro-2-naphthyl acetate, 3-pentyltetrahydro-2H-pyran-4-yl acetate, decahydro-2,5,5,8a-tetramethyl-2-naphthyl acetate, 4,7-methano-3a,4,5,6,7,7a-hexahydro-5 or 6-indenyl acetate, 4,7-methano-3a,4,5,6,7,7a-hexahydro-5 or 6-indenyl propionate, 4,7-methano-3a,4,5,6,7,7a-hexahydro-5 or 6-indenyl-isobutyrate and 4,7-methanooctahydro-5 or 6-indenyl acetate;
xvii) esters of cycloaliphatic carboxylic acids, such as, for example, allyl 3-cyclohexyl-propionate, allyl cyclohexyl oxyacetate, methyl dihydrojasmonate, methyl jasmonate, methyl 2-hexyl-3-oxocyclopentanecarboxylate, ethyl 2-ethyl-6,6-dimethyl-2-cyclohexenecarboxylate, ethyl 2,3,6,6-tetramethyl-2-cyclohexenecarboxylate and ethyl 2-methyl-1,3-dioxolane-2-acetate;
xviii) esters of araliphatic alcohols and aliphatic carboxylic acids, such as, for example, benzyl acetate, benzyl propionate, benzyl isobutyrate, benzyl isovalerate, 2-phenylethyl acetate, 2-phenylethyl propionate, 2-phenylethyl isobutyrate, 2-phenylethyl isovalerate, 1-phenylethyl acetate, α-trichloromethylbenzyl acetate, α,α-dimethylphenylethyl acetate, α,α-dimethylphenylethyl butyrate, cinnamyl acetate, 2-phenoxyethyl isobutyrate and 4-methoxybenzyl acetate;
xix) araliphatic ethers and their acetals, such as, for example, 2-phenylethyl methyl ether, 2-phenylethyl isoamyl ether, 2-phenyethyl cyclohexyl ether, 2-phenylethyl-1-ethoxyethyl ether, phenylacetaldehyde dimethyl acetal, phenylacetaldehyde diethyl acetal, 2-phenylpropionaldehyde dimethyl acetal, phenylacetaldehyde glycerol acetal, 2,4,6-trimethyl-4-phenyl-1,3-dioxane, 4,4a,5,9b-tetrahydroindeno[1,2-d]-m-dioxin and 4,4a,5,9b-tetrahydro-2,4-dimethylindeno[1,2-d]-m-dioxin;
xx) aromatic and araliphatic aldehydes and ketones, such as, for example, benzaldehyde; phenylacetaldehyde, 3-phenylpropanal, 2-phenyl propanal, 4-methylbenzaldehyde, 4-methylphenylacetaldehyde, 3-(4-ethylphenyl)-2,2-dimethylpropanal, 2-methyl-3-(4-isopropylphenyl)propanal, 2-methyl-3-(4-tert-butylphenyl)propanal, 3-(4-tert-butylphenyl)propanal, cinnamaldehyde, alpha-butylcinnamaldehyde, alpha-amylcinnamaldehyde, alpha-hexylcinnamaldehyde, 3-methyl-5-phenylpentanal, 4-methoxybenzaldehyde, 4-hydroxy-3-methoxybenzaldehyde, 4-hydroxy-3-ethoxybenzaldehyde, 3,4-methylene-dioxybenzaldehyde, 3,4-dimethoxybenzaldehyde, 2-methyl-3-(4-methoxyphenyl)propanal, 2-methyl-3-(4-methylendioxyphenyl)propanal, acetophenone, 4-methylacetophenone, 4-methoxyacetophenone, 4-tert-butyl-2,6-dimethylacetophenone, 4-phenyl-2-butanone, 4-(4-hydroxyphenyl)-2-butanone, 1-(2-naphthalenyl)ethanone, benzophenone, 1,1,2,3,3,6-hexamethyl-5-indanyl methyl ketone, 6-tert.-butyl-1,1-dimethyl-4-indanyl methyl ketone, 1-[2,3-dihydro-1,1,2,6-tetramethyl-3-(1-methyl-ethyl)-1H-5-indenyl]ethanone and 5',6',7',8'-tetrahydro-3',5',5',6',8',8'-hexamethyl-2-acetonaphthone;
xxi) aromatic and araliphatic carboxylic acids and esters thereof, such as, for example, benzoic acid, phenylacetic acid, methyl benzoate, ethyl benzoate, hexyl benzoate, benzyl benzoate, methyl phenylacetate, ethyl phenylacetate, geranyl phenylacetate, phenylethyl phenylacetate, methyl cinnamate, ethyl cinnamate, benzyl cinnamate, phenylethyl cinnamate, cinnamyl cinnamate, allyl phenoxyacetate, methyl salicylate, isoamyl salicylate, hexyl salicylate, cyclohexyl salicylate, cis-3-hexenyl salicylate, benzyl salicylate, phenylethyl salicylate, methyl 2,4-dihydroxy-3,6-dimethylbenzoate, ethyl 3-phenylglycidate and ethyl 3-methyl-3-phenylglycidate;
xxii) nitrogen-containing aromatic compounds, such as, for example, 2,4,6-trinitro-1,3-dimethyl-5-tert-butylbenzene, 3,5-dinitro-2,6-dimethyl-4-tert-butylacetophenone, cinnamonitrile, 5-phenyl-3-methyl-2-pentenonitrile, 5-phenyl-3-methylpentanonitrile, methyl anthranilate, methyl-N-methylanthranilate, Schiff's bases of methyl anthranilate with 7-hydroxy-3,7-dimethyloctanal, 2-methyl-3-(4-tert.-butylphenyl)propanal or 2,4-dimethyl-3-cyclohexene carbaldehyde, 6-isopropylquinoline, 6-isobutylquinoline, 6-sec-butylquinoline, indole, skatole, 2-methoxy-3-isopropylpyrazine and 2-isobutyl-3-methoxypyrazine;
xxiii) phenols, phenyl ethers and phenyl esters, such as, for example, estragole, anethole, eugenol, eugenyl methyl ether, isoeugenol, isoeugenol methyl ether, thymol, carvacrol, diphenyl ether, beta-naphthyl methyl ether, beta-naphthyl ethyl ether, beta-naphthyl isobutyl ether, 1,4-dimethoxybenzene, eugenyl acetate, 2-methoxy-4-methylphenol, 2-ethoxy-5-(1-propenyl)phenol and p-cresyl phenylacetate;
xxiv) heterocyclic compounds, such as, for example, 2,5-dimethyl-4-hydroxy-2H-furan-3-one, 2-ethyl-4-hydroxy-5-methyl-2H-furan-3-one, 3-hydroxy-2-methyl-4H-pyran-4-one, 2-ethyl-3-hydroxy-4H-pyran-4-one;
xxv) lactones, such as, for example, 1,4-octanolide, 3-methyl-1,4-octanolide, 1,4-nonanolide, 1,4-decanolide, 8-decen-1,4-olide, 1,4-undecanolide, 1,4-dodecanolide, 1,5-decanolide, 1,5-dodecanolide, 1,15-pentadecanolide, cis- and trans-1'-pentadecen-1,15-olide, cis- and trans-12-pentadecen-1,15-olide, 1,16-hexadecanolide, 9-hexadecen-1,16-olide, 10-oxa-1,16-hexadecanolide, 11-oxa-1,16-hexadecanolide, 12-oxa-1, 16-hexadecanolide, ethylene-1,12-dodecanedioate, ethylene-1,13-tridecanedioate, coumarin, 2,3-dihydrocoumarin, and octahydrocoumarin.

Naturally occurring exudates such as essential oils extracted from plants may also be used as fragrant components in the invention. Essential oils are usually extracted by processes of steam distillation, solid-phase extraction, cold pressing, solvent extraction, supercritical fluid extraction, hydrodistillation or simultaneous distillation-extraction. Essential oils may be derived from several different parts of the plant, including for example leaves, flowers, roots, buds, twigs, rhizomes, heartwood, bark, resin, seeds and fruits. The major plant families from which essential oils are extracted include *Asteraceae, Myrtaceae, Lauraceae, Lamiaceae, Myrtaceae, Rutaceae* and *Zingiberaceae.* The oil is "essential" in the sense that it carries a distinctive scent, or essence, of the plant.

Essential oils are understood by those skilled in the art to be complex mixtures which generally consist of several tens or hundreds of constituents. Most of these constituents possess an isoprenoid skeleton with 10 atoms of carbon (monoterpenes), 15 atoms of carbon (sesquiterpenes) or 20 atoms of carbon (diterpenes). Lesser quantities of other constituents can also be found, such as alcohols, aldehydes, esters and phenols. However, an individual essential oil is usually considered as a single ingredient in the context of practical fragrance formulation. Therefore, an individual essential oil may be considered as a single fragrant component for the purposes of this invention.

Specific examples of essential oils for use as fragrant components in the invention include cedarwood oil, juniper oil, cumin oil, cinnamon bark oil, camphor oil, rosewood oil, ginger oil, basil oil, eucalyptus oil, lemongrass oil, peppermint oil, rosemary oil, spearmint oil, tea tree oil, frankincense oil, chamomile oil, clove oil, jasmine oil, lavender oil, rose oil, ylang-ylang oil, bergamot oil, grapefruit oil, lemon oil, lime oil, orange oil, fir needle oil, galbanum oil, geranium oil, grapefruit oil, pine needle oil, caraway oil, labdanum oil, lovage oil, marjoram oil, mandarin oil, clary sage oil, nutmeg oil, myrtle oil, clove oil, neroli oil, patchouli oil, sandalwood oil, thyme oil, verbena oil, vetiver oil and wintergreen oil.

The number of different fragrant components contained in the fragrance formulation (f1) will generally be at least 4, preferably at least 6, more preferably at least 8 and most preferably at least 10, such as from 10 to 200 and more preferably from 10 to 100.

Typically, no single fragrant component will comprise more than 70% by weight of the total weight of fragrance formulation (f1). Preferably no single fragrant component will comprise more than 60% by weight of the total weight of fragrance formulation (f1) and more preferably no single fragrant component will comprise more than 50% by weight of the total weight of fragrance formulation (f1).

The term "fragrance formulation" in the context of this invention denotes the fragrant components as defined above, plus any optional excipients. Excipients may be included within fragrance formulations for various purposes, for example as solvents for insoluble or poorly-soluble components, as diluents for the more potent components or to control the vapour pressure and evaporation characteristics of the fragrance formulation. Excipients may have many of the characteristics of fragrant components but they do not have strong odours in themselves. Accordingly, excipients may be distinguished from fragrant components because they can be added to fragrance formulations in high proportions such as 30% or even 50% by weight of the total weight of the fragrance formulation without significantly changing the odour quality of the fragrance formulation. Some examples of suitable excipients include ethanol, isopropanol, diethylene glycol monoethyl ether, dipropylene glycol, diethyl phthalate and triethyl citrate. Mixtures of any of the above described materials may also be suitable.

A suitable fragrance formulation (f1) for use in the invention comprises a blend of at least 10 fragrant components selected from hydrocarbons i); aliphatic and araliphatic alcohols ii); aliphatic aldehydes and their acetals iv); aliphatic carboxylic acids and esters thereof viii); acyclic terpene alcohols ix); cyclic terpene aldehydes and ketones xii); cyclic and cycloaliphatic ethers xiii); esters of cyclic alcohols xvi); esters of araliphatic alcohols and aliphatic carboxylic acids xviii); araliphatic ethers and their acetals xix); aromatic and araliphatic aldehydes and ketones xx) and aromatic and araliphatic carboxylic acids and esters thereof xxi); as are further described and exemplified above.

The content of fragrant components preferably ranges from 50 to 100%, more preferably from 60 to 100% and most preferably from 75 to 100% by weight based on the total weight of fragrance formulation (f1); with one or more excipients (as described above) making up the balance of the fragrance formulation (f1) as necessary.

Fragrance formulation (f1) is in the form of free droplets dispersed in the composition. The term "free droplets" in the context of this invention denotes droplets which are not entrapped within discrete polymeric microparticles.

In a typical liquid laundry detergent composition according to the invention the level of fragrance formulation (f1) will generally range from 0.1 to 0.75%, and preferably ranges from 0.3 to 0.6% (by weight based on the total weight of the composition).

Preferably, where the fragrance comprises aldehyde, it is preferred that the total level of aldehyde in the composition of the invention is less than 0.25% wt. of the composition. This is to provide a composition with improved stability in the presence of polyamine.

### MICROCAPSULES

One type of microparticle suitable for use in the invention is a microcapsule. Microencapsulation may be defined as the process of surrounding or enveloping one substance within another substance on a very small scale, yielding capsules ranging from less than one micron to several hundred microns in size. The material that is encapsulated may be called the core, the active ingredient or agent, fill, payload, nucleus, or internal phase. The material encapsulating the core may be referred to as the coating, membrane, shell, or wall material.

Microcapsules typically have at least one generally spherical continuous shell surrounding the core. The shell may contain pores, vacancies or interstitial openings depending on the materials and encapsulation techniques employed. Multiple shells may be made of the same or different encapsulating materials, and may be arranged in strata of varying thicknesses around the core.

Altematively, the microcapsules may be asymmetrically and variably shaped with a quantity of smaller droplets of core material embedded throughout the microcapsule.

The shell may have a barrier function protecting the core material from the environment external to the microcapsule, but it may also act as a means of modulating the release of core materials such as fragrance. Thus, a shell may be water soluble or water swellable and fragrance release may be actuated in response to exposure of the microcapsules to a moist environment. Similarly, if a shell is temperature sensitive, a microcapsule might release fragrance in response to elevated temperatures. Microcapsules may also release fragrance in response to shear forces applied to the surface of the microcapsules.

A preferred type of polymeric microparticle suitable for use in the invention is a polymeric core-shell microcapsule in which at least one generally spherical continuous shell of polymeric material surrounds a core containing the fragrance formulation (f2). The shell will typically comprise at most 20% by weight based on the total weight of the microcapsule. The fragrance formulation (f2) will typically comprise from about 10 to about 60% and preferably from about 20 to about 40% by weight based on the total weight of the microcapsule. The amount of fragrance (f2) may be measured by taking a slurry of the microcapsules, extracting into ethanol and measuring by liquid chromatography.

Polymeric core-shell microcapsules for use in the invention may be prepared using methods known to those skilled in the art such as coacervation, interfacial polymerization, and polycondensation.

The process of coacervation typically involves encapsulation of a generally water-insoluble core material by the precipitation of colloidal material(s) onto the surface of droplets of the material. Coacervation may be simple e.g. using one colloid such as gelatin, or complex where two or possibly more colloids of opposite charge, such as gelatin and gum arabic or gelatin and carboxymethyl cellulose, are used under carefully controlled conditions of pH, temperature and concentration.

Interfacial polymerisation typically proceeds with the formation of a fine dispersion of oil droplets (the oil droplets containing the core material) in an aqueous continuous phase. The dispersed droplets form the core of the future microcapsule and the dimensions of the dispersed droplets directly determine the size of the subsequent microcapsules. Microcapsule shell-forming materials (monomers or oligomers) are contained in both the dispersed phase (oil droplets) and the aqueous continuous phase and they react together at the phase interface to build a polymeric wall around the oil droplets thereby to encapsulate the droplets and form core-shell microcapsules. An example of a core-shell microcapsule produced by this method is a polyurea microcapsule with a shell formed by reaction of diisocyanates or polyisocyanates with diamines or polyamines.

Polycondensation involves forming a dispersion or emulsion of the core material in an aqueous solution of precondensate of polymeric materials under appropriate conditions of agitation to produce capsules of a desired size, and adjusting the reaction conditions to cause condensation of the precondensate by acid catalysis, resulting in the condensate separating from solution and surrounding the dispersed core material to produce a coherent film and the desired microcapsules. An example of a core-shell microcapsule produced by this method is an aminoplast microcapsule with a shell formed from the polycondensation product of melamine (2,4,6-triamino-1,3,5-triazine) or urea with formaldehyde. Suitable cross-linking agents (e.g. toluene diisocyanate, divinyl benzene, butanediol diacrylate) may also be used and secondary wall polymers may also be used as appropriate, e.g. anhydrides and their derivatives, particularly polymers and co-polymers of maleic anhydride.

One example of a preferred polymeric core-shell microcapsule for use in the invention is an aminoplast microcapsule with an aminoplast shell surrounding a core containing the fragrance formulation (f2). More preferably such an aminoplast shell is formed from the polycondensation product of melamine with formaldehyde.

Polymeric microparticles suitable for use in the invention will generally have an average particle size between 100 nanometers and 50 microns. Particles larger than this are entering the visible range. Examples of particles in the sub-micron range include latexes and mini-emulsions with a typical size range of 100 to 600 nanometers. The preferred particle size range is in the micron range. Examples of particles in the micron range include polymeric core-shell microcapsules (such as those further described above) with a typical size range of 1 to 50 microns, preferably 5 to 30 microns. The average particle size can be determined by light scattering using a Malvem Mastersizer with the average particle size being taken as the median particle size D (0.5) value. The particle size distribution can be narrow, broad or multimodal. If necessary, the microcapsules as initially produced may be filtered or screened to produce a product of greater size uniformity.

Polymeric microparticles suitable for use in the invention may be provided with a deposition aid at the outer surface of the microparticle. Deposition aids serve to modify the properties of the exterior of the microparticle, for example to make the microparticle more substantive to a desired substrate.

Desired substrates include cellulosics (including cotton) and polyesters (including those employed in the manufacture of polyester fabrics).

The deposition aid may suitably be provided at the outer surface of the microparticle by means of covalent bonding, entanglement or strong adsorption. Examples include polymeric core-shell microcapsules (such as those further described above) in which a deposition aid is attached to the outside of the shell, preferably by means of covalent bonding. While it is preferred that the deposition aid is attached directly to the outside of the shell, it may also be attached via a linking species.

Deposition aids for use in the invention may suitably be selected from polysaccharides having an affinity for cellulose. Such polysaccharides may be naturally occurring or synthetic and may have an intrinsic affinity for cellulose or may have been derivatised or otherwise modified to have an affinity for cellulose. Suitable polysaccharides have a 1-4 linked β glycan (generalised sugar) backbone structure with at least 4, and preferably at least 10 backbone residues which are β1-4 linked, such as a glucan backbone (consisting of β1-4 linked glucose residues), a mannan backbone (consisting of β1-4 linked mannose residues) or a xylan backbone (consisting of β1-4 linked xylose residues). Examples of such β1-4 linked polysaccharides include xyloglucans, glucomannans, mannans, galactomannans, β(1-3),(1-4) glucan and the xylan family incorporating glucurono-, arabino- and glucuronoarabinoxylans. Preferred β1-4 linked polysaccharides for use in the invention may be selected from xyloglucans of plant origin, such as pea xyloglucan and tamarind seed xyloglucan (TXG) (which has a β1-4 linked glucan backbone with side chains of α-D xylopyranose and β-D-galactopyranosyl-(1-2)-α-D-xylo-pyranose, both 1-6 linked to the backbone); and galactomannans of plant origin such as locust bean gum (LBG) (which has a mannan backbone of β1-4 linked mannose residues, with single unit galactose side chains linked α1-6 to the backbone).

Also suitable are polysaccharides which may gain an affinity for cellulose upon hydrolysis, such as cellulose mono-acetate; or modified polysaccharides with an affinity for cellulose such as hydroxypropyl cellulose, hydroxypropyl methylcellulose, hydroxyethyl methylcellulose, hydroxypropyl guar, hydroxyethyl ethylcellulose and methylcellulose.

Deposition aids for use in the invention may also be selected from phthalate containing polymers having an affinity for polyester. Such phthalate containing polymers may have one or more nonionic hydrophilic segments comprising oxyalkylene groups (such as oxyethylene, polyoxyethylene, oxypropylene or polyoxypropylene groups), and one or more hydrophobic segments comprising terephthalate groups. Typically, the oxyalkylene groups will have a degree of polymerization of from 1 to about 400, preferably from 100 to about 350, more preferably from 200 to about 300. A suitable example of a phthalate containing polymer of this type is a copolymer having random blocks of ethylene terephthalate and polyethylene oxide terephthalate.

Mixtures of any of the above described materials may also be suitable.

Deposition aids for use in the invention will generally have a weight average molecular weight (M_{w}) in the range of from about 5 kDa to about 500 kDa, preferably from about 10 kDa to about 500 kDa and more preferably from about 20 kDa to about 300 kDa.

One example of a particularly preferred polymeric core-shell microcapsule for use in the invention is an aminoplast microcapsule with a shell formed by the polycondensation of melamine with formaldehyde; surrounding a core containing the fragrance formulation (f2); in which a deposition aid is attached to the outside of the shell by means of covalent bonding. The preferred deposition aid is selected from β1-4 linked polysaccharides, and in particular the xyloglucans of plant origin, as are further described above.

The present inventors have surprisingly observed that it is possible to reduce the total level of fragrance included in the composition of the invention without sacrificing the overall fragrance experience delivered to the consumer at key stages in the laundry process. A reduction in the total level of fragrance is advantageous for cost and environmental reasons.

Accordingly, the total amount of fragrance formulation (f1) and fragrance formulation (f2) in the composition of the invention suitably ranges from 0.5 to 1.4%, preferably from 0.5 to 1.2%, more preferably from 0.5 to 1% and most preferably from 0.6 to 0.9% (by weight based on the total weight of the composition).

The weight ratio of fragrance formulation (f1) to fragrance formulation (f2) in the composition of the invention preferably ranges from 60:40 to 45:55. Particularly good results have been obtained at a weight ratio of fragrance formulation (f1) to fragrance formulation (f2) of around 50:50.

The fragrance (f1) and fragrance (f2) are typically incorporated at different stages of formation of the composition of the invention. Typically, the discrete polymeric microparticles (e.g. microcapsules) entrapping fragrance formulation (f2) are added in the form of a slurry to a warmed base formulation comprising other components of the composition (such as surfactants and solvents). Fragrance (f1) is typically post-dosed later after the base formulation has cooled.

### FURTHER OPTIONAL INGREDIENTS

A composition of the invention may contain further optional ingredients to enhance performance and/or consumer acceptability. Examples of such ingredients include foam boosting agents, preservatives (e.g. bactericides), polyelectrolytes, anti-shrinking agents, anti-wrinkle agents, antioxidants, sunscreens, anti-corrosion agents, drape imparting agents, anti-static agents, ironing aids, colorants, pearlisers and/or opacifiers, and shading dye. Each of these ingredients will be present in an amount effective to accomplish its purpose. Generally, these optional ingredients are included individually at an amount of up to 5% (by weight based on the total weight of the composition).

### PACKAGING AND DOSING

A composition of the invention may be packaged as unit doses in polymeric film soluble in the wash water. Alternatively, a composition of the invention may be supplied in multidose plastics packs with a top or bottom closure. A dosing measure may be supplied with the pack either as a part of the cap or as an integrated system.

The composition is particularly useful for use in fabric treatment (or specify to suit: laundering, cleaning, conditioning, stain removal etc) processes carried out at least partially in auto-dosing washing machines. The auto-dosing function may comprise a controller which is internal to the washing machine or external. In the case of external controllers, these may be connected to the machine wirelessly or by wired connection so as to allow control of the washing machine functions.

The auto-dosing machine may comprise at least one reservoir for bulk storage of multiple doses of the composition and an automatic dosing device for automatically dispensing one or more doses of the composition from the reservoir into a treatment chamber e.g. machine drum. The at least one reservoir may be housed internally or externally of the machine. One or more reservoirs may be removable and/or replaceable and/or re-fillable or any combination thereof. One or more reservoirs may be purchased by the consumer as a pre-filled cartridge, containing multiple doses of the composition.

Dosing may be automatic in the sense that the amount of the composition dosed for a treatment programme is calculated and/or implemented by the washing machine. The auto-dosing function may extend to recommendation and/or selection of appropriate wash programmes by the washing machine. Calcuation of the dose and/or wash programme may be in response to data input by the user e.g. or directly into a washing machine controller or via a personal computing device such as a laptop, notebook or smart phone or data detected by the machine or associated devices etc.

For example the user may input data regarding fabric staining etc or this may be detected by the machine or a stain detection device. The machine may dose appropriate amounts of the composition / ratios of ingredients optimised for stain treatment. The machine may also select the most appropriate wash programme for stain treatment.

Accordingly, the present invention may incorporate a method of treating a fabric substrate with the composition in an auto-dosing washing machine as above described, the machine comprising at least one reservoir for bulk storage of multiple doses of the composition and an automatic dosing device which automatically calcuates and dispenses one or more doses of the composition from the reservoir to a fabric treatment chamber, and optionally recommends and/or selects an appropriate wash programmes for said substrate, the method comprising the steps:
i. adding the composition to the reservoir, and
ii. initiating a wash cycle whereby a dose of the composition is automatically calculated and dispensed from the reservoir by the washing machine.

A method of laundering fabric using a composition of the invention will usually involve diluting the dose of detergent composition with water to obtain a wash liquor, and washing fabrics with the wash liquor so formed.

The dilution step preferably provides a wash liquor which comprises *inter alia* from about 3 to about 20 g/wash of detersive surfactants (as are further defined above).

In automatic washing machines the dose of detergent composition is typically put into a dispenser and from there it is flushed into the machine by the water flowing into the machine, thereby forming the wash liquor. From 5 up to about 65 litres of water may be used to form the wash liquor depending on the machine configuration. The dose of detergent composition may be adjusted accordingly to give appropriate wash liquor concentrations. For example, dosages for a typical front-loading washing machine (using 10 to 15 litres of water to form the wash liquor) may range from about 10 ml to about 60 ml, preferably about 15 to 40 ml. Dosages for a typical top-loading washing machine (using from 40 to 60 litres of water to form the wash liquor) may be higher, e.g. up to about 100 ml.

A subsequent aqueous rinse step and drying the laundry is preferred.

### EXAMPLES

### EXAMPLE 1

This is the formulation according to the present invention.

| **Ingredient** | **%wt.** |
|---|---|
| 3EO SLES | 6.8% |
| 25-7 Alcohol Ethoxylate (Non-Ionic) | 10.2% |
| Fatty Acid | 0.75% |
| Triethanolamine | 1.5% |
| NaOH | 1% |
| Soil Release Polymer | 0.3% |
| Polyamine | 1.7% |
| Itaconic Acid | 0.5/1% |
| Citric Acid | 0.5/1% |
| Latic Acid | 0.5/1% |
| Demin Water | Balance |

### EXAMPLE 2

This data set shows that itaconic acid is an effective preservative and compares with citric acid and lactic acid which although described as effective antimicrobials are not capable of effectively preserving a laundry liquid composition.

### Challenge test method:

A modified challenge that complies with the current European Pharmacopoeia (Ph. Eur. Or EP) 5.1.3 criteria was performed on a subsample of both the unpreserved and each dosed product. The bacterial pool was added to each sample container at a ratio of 1:100. The final concentration of inoculum in the product should be between 5 X 10⁵ and 5 x 10⁶ CFU/G of test product. Each product is mixed with a sterile spatula to ensure a homogenous distribution of the inocula throughout the product.

| | **Inoculum level (cfu/mL)** | | |
|---|---|---|---|
| **Microorganismpool** | **Day 0** | **Day 7** | **Day 14** |
| *Burkholderia cepacia Pseudomonas aeruginosa Psuedomonas putida Acinetobacter Iwoffii* | 3.9E+08 | 3.5E+08 | 3.6E+08 |

Both the inoculum level and the level of microorganism within each sample was quantified using a Total Viable Count (TVC) pour plate method at 7, 14, 21 and 28 days. A 1:10 dilution was made with a subsample of each product, performed separately in Peptone (0.1%)/ tween 80 (2%) neutralising agent. A 1:10 and 1:100 dilution of each subsample was performed and pour plates produced at each dilution using tryptone soya agar. Plates were incubated at 28oC for 48 hours and then examined for growth. Visible colonies were counted with the aid of a Quebec Colony Counter and recorded for analysis against the challenge test criteria. During the removal of a subsample of product for TVC, a re-inoculation is performed at 7 and 14 days, reintroducing 5 X 10⁶ CFU/G of bacteria before mixing using a sterile spatula to homogenise the re-inoculation.

| | | **Microbial Log reduction** | | | |
|---|---|---|---|---|---|
| | **Sample** | **7 days** | **14 days** | **21 days** | **28 days** |
| 1 | Unpreserved | <2.73 | <2.58 | <2.65 | <2.65 |
| 2 | 0.5% Itaconic acid | >5.59 | >5.54 | >5.56 | >5.56 |
| 3 | 1.0% Itaconic acid | >5.59 | >5.54 | >5.56 | >5.56 |
| 4 | 0.5% Lactic acid | >5.59 | 2.32 | <2.56 | <2.56 |
| 5 | 1.0% Lactic acid | >5.59 | >5.54 | >5.56 | >5.56 |
| 6 | 0.5% Citric acid | >5.59 | <2.54 | <2.56 | <2.56 |
| 7 | 1.0% Citric acid | >5.59 | >5.54 | >5.56 | >5.56 |

The above results demonstrate the effectiveness of itaconic acid as a preservation solution for a liquid laundry composition.

## Claims

1. Laundry liquid detergent composition comprising itaconic acid or salt thereof and a cleaning surfactant selected from anionic and non-ionic surfactants and mixtures thereof.

2. A composition according to any preceding claim in which the level of itaconic acid or salt thereof is from 0.05 to 2 wt% of the total composition.

3. A composition according to any preceding claim comprising a polyethyleneimine.

4. A composition according to any preceding claim comprising a soil release polymer.

5. A composition according to any preceding claim having a pH of from 4.0 to 6.5.

6. A composition according to any preceding claim comprising less than 1% wt. linear alkylbenzene sulphonate surfactant.

7. A method for preserving a laundry liquid detergent composition using itaconic acid or salt thereof.

## Patentansprüche

1. Flüssiges Waschmittel, umfassend Itaconsäure oder ein Salz davon und ein Reinigungstensid, ausgewählt unter anionischen und nichtionischen Tensiden und Mischungen davon.

2. Zusammensetzung nach einem vorhergehenden Anspruch, wobei der Gehalt an Itaconsäure oder einem Salz davon 0,05 bis 2 Gew.-% der Gesamtzusammensetzung beträgt.

3. Zusammensetzung nach einem der vorhergehenden Ansprüche, die ein Polyethylenimin umfasst.

4. Zusammensetzung nach einem vorhergehenden Anspruch, die ein Soil-Release-Polymer umfasst.

5. Zusammensetzung nach einem vorhergehenden Anspruch mit einem pH-Wert von 4,0 bis 6,5.

6. Zusammensetzung nach einem vorhergehenden Anspruch, die weniger als 1 Gew.-% lineares Alkylbenzolsulfonat-Tensid umfasst.

7. Verfahren zur Konservierung einer flüssigen Waschmittelzusammensetzung unter Verwendung von Itaconsäure oder einem Salz davon.

## Revendications

1. Composition détergente liquide pour le linge comprenant de l'acide itaconique ou un sel de celui-ci et un tensioactif nettoyant choisi parmi les tensioactifs anioniques et non-ioniques et leurs mélanges.

2. Composition selon la revendication précédente, dans laquelle le niveau d'acide itaconique ou de son sel est de 0,05 à 2 % en poids de la composition totale.

3. Composition selon l'une quelconque des revendications précédentes, comprenant une polyéthylène-imine.

4. Composition selon l'une quelconque des revendications précédentes, comprenant un polymère d'enlèvement des salissures.

5. Composition selon l'une quelconque des revendications précédentes, ayant un pH de 4,0 à 6,5.

6. Composition selon l'une quelconque des revendications précédentes, comprenant moins de 1 % en poids de tensioactif alkylbenzènesulfonate linéaire.

7. Procédé pour conserver une composition détergente liquide pour le linge utilisant de l'acide itaconique ou un sel de celui-ci.
